# EUROPEAN PATENT SPECIFICATION

(11) **EP 2 699 775 B1**
(45) Date of publication and mention of the grant of the patent: **27.07.2016**
(21) Application number: 12773522.3
(22) Date of filing: 18.04.2012
(51) Int. Cl.: F01N 11/00, F01N 3/20, G01F 23/22

(54) **METHOD AND DEVICE FOR DETERMINATION OF REMAINING VOLUME OF REDUCING AGENT IN A CONTAINER PERTAINING TO AN SCR SYSTEM**
VERFAHREN UND VORRICHTUNG ZUR BESTIMMUNG DES RESTVOLUMENS EINES REDUKTIONSMITTELS IN EINEM BEHÄLTER FÜR EIN SCR-SYSTEM
PROCÉDÉ ET DISPOSITIF POUR DÉTERMINER UN VOLUME RESTANT D'UN AGENT RÉDUCTEUR PLACÉ DANS UN RÉCIPIENT D'UN SYSTÈME DE RÉDUCTION CATALYTIQUE SÉLECTIVE (SCR)

(30) Priority: 19.04.2011 SE 1150343
(43) Date of publication of application: 26.02.2014
(73) Proprietor: Scania CV AB, 151 87 Södertälje (SE)
(72) Inventor: GUSTAFSSON, Erik, SE-151 47 Södertälje (SE)
(74) Representative: Scania CV AB
(86) International application number: PCT/SE2012/050415
(87) International publication number: WO 2012/144949

(56) References cited:
- EP-A2- 0 850 796
- EP-A2- 0 850 796
- DE-A1-102008 043 778
- DE-A1-102008 043 778
- DE-A1-102010 062 302
- US-A1- 2010 086 446
- US-A1- 2010 089 037

## Description

### TECHNICAL FIELD

The present invention relates to a method for determination of remaining volumes of liquid reducing agent in a container pertaining to an SCR system for exhaust cleaning. The invention relates also to a computer programme product comprising programme code for a computer for implementing a method according to the invention. The invention relates also to a device comprising an SCR system for exhaust cleaning and to a motor vehicle which is equipped with the device.

### BACKGROUND

Vehicles today use, for example, urea as reductant in SCR (selective catalytic reduction) systems which comprise an SCR catalyst in which said reductant and NOx gas can react and be converted to nitrogen gas and water. Various types of reductants may be used in SCR systems. AdBlue is an example of a commonly used reductant.

A type of SCR system comprises a container which holds a reductant. The SCR system has also a pump arranged to draw said reductant from the container via a suction hose and to supply it via a pressurised hose to a dosing unit situated adjacent to an exhaust system of the vehicle, e.g. adjacent to an exhaust pipe of the exhaust system. The dosing unit is arranged to inject a necessary amount of reductant into the exhaust pipe upstream of the SCR catalyst according to operating routines which are stored in a control unit of the vehicle. To make it easier to regulate the pressure when there are only small or no dosing amounts, the system comprises also a return hose which runs back to the container from a pressure side of the system.

To cope with meeting the ever more stringent emission requirements as regards NOₓ, it is becoming increasingly common for vehicle manufacturers to equip their new vehicles with SCR systems, e.g. of the kind described above. It is also desirable to be able to diagnose whether a vehicle's SCR system doses correct amounts of reducing agent. One way of diagnosing such low consumption of reducing agent as would cause unacceptable emission discharges is to compare decreases in a volume of reducing agent carried in the container with calculated volumes of reducing agent dosed.

A type of SCR system uses a level sensor provided with a float sensor and arranged vertically in the reducing agent container. This float sensor is adapted to delivering discrete signals, i.e. the only levels read are certain predetermined levels at which so-called switches are situated. The switches are adapted to delivering said discrete signals when a level of the reducing agent drops below the level at which the switch is situated. When the actual level of the reducing agent in the container is between two switches, the level read will often be the lower of the levels for the respective switches.

A way of arriving at a consumption diagnosis is to save values for calculated reducing agent amounts dosed and corresponding prevailing reducing agent levels detected in the container in a memory in a control unit when a level for a certain switch is passed, and then to compare various such saved levels in order to decide whether calculated reducing agent amounts dosed correspond to decreases in volumes of reducing agent in the container. To eliminate measurement errors and reduce the risk of erroneous detections, it is important to be able to detect very exactly when a level of the reducing agent passes a switch, since this can provide an accurate value for the volume of reducing agent remaining in the container at the time. However, this is difficult to achieve, inter alia because level measurements are affected by splashing in the container.

There is thus a need to improve today's way of determining remaining volumes of reducing agent in a container pertaining to an SCR system for motor vehicle exhaust cleaning.

US2005251318 and US2010086446 refer to methods for diagnosing urea solution supply in SCR systems by measuring a liquid level and amounts of urea solution consumed.

US2009182516 refers to a method which uses a computer with associated filters to increase the accuracy of measurements when the contents of a urea tank splash.

### SUMMARY OF THE INVENTION

An object of the present invention is to propose a novel and advantageous method for improving the performance of an SCR system.

Another object of the invention is to propose a novel and advantageous device and a novel and advantageous computer programme for improving the performance of an SCR system.

An object of the present invention is to propose a novel and advantageous method for determination of remaining volumes of liquid reducing agent in a container pertaining to an SCR system for exhaust cleaning.

Another object of the invention is to propose a novel and advantageous device and a novel and advantageous computer programme for determination of remaining volumes of liquid reducing agent in a container pertaining to an SCR system for exhaust cleaning.

A further object of the invention is to propose a method, a device and a computer programme for achieving increased accuracy in determination of remaining volumes of liquid reducing agent in a container pertaining to an SCR system for exhaust cleaning.

A further object of the invention is to propose an alternative method, an alternative device and an alternative computer programme for determination of remaining volumes of liquid reducing agent in a container pertaining to an SCR system for exhaust cleaning.

These objects are achieved with a method according to claim 1.

According to an aspect of the invention, a proposed method for determination of remaining volumes of liquid reducing agent in a container pertaining to an SCR system for exhaust cleaning comprises the steps of
- continuously determining remaining volumes of reducing agent in the form of discrete volume indications,
- continuously determining reducing agent volumes dosed by existing dosing configurations,
- setting a period of time on the basis of said volumes dosed,
- continuously deciding whether such a discrete volume indication determined is within a specific portion of said period of time and, if such is the case, setting remaining volumes to a lower discrete volume indication.

According to an aspect of the invention, the locations of all of the switches of a measuring device, e.g. a float sensor, situated in the reducing agent container are saved in an electronic control unit which is provided to control the SCR system. Each location represents a known remaining volume of reducing agent. Said period of time may be determined on the basis of these respective switch positions (corresponding to volumes of remaining reducing agent) and of the calculated volume of reducing agent dosed. This may be done by taking the calculated volume of reducing agent dosed and comparing it with the discrete volume indications which the float sensor continuously detects. A period of time may be determined for each switch, and these periods may be regarded as validation times. Said periods may each be determined on the basis of a respective probability function which may itself be established on the basis of calculated cumulative reducing agent volumes dosed. Said probability functions are described in more detail below.

The invention achieves the positive effect of reducing the probability of erroneous detection by a switch, hence reducing also measurement errors and the risk of false alarms suggesting too low consumption of the reducing agent in the SCR system. The invention also affords with advantage greater potential for handling temporary changes in reducing agent levels detected in the container which may be due to the vehicle travelling on a long hill.

A further advantage is that a driver of the vehicle can be provided with better feedback as regards prevailing levels of reducing agent in the container.

Said discrete volume indications may be predetermined depending inter alia on container configuration. Taking the configuration of the container into account when the respective switch is associated with a discrete volume indication results in a particularly flexible solution which can be adapted to a large number of container configurations and hence applications of the present invention. The invention is thus an attractive solution for various interested parties, e.g. different vehicle manufacturers with unique container configurations.

The method may further comprise the step of choosing said period of time on the basis of a reducing agent volume dosed since the time of the latest discrete volume indication determined. Said reducing agent volume dosed may be a cumulative reducing agent volume dosed, calculated by a control unit. Said reducing agent volume dosed may be a reducing agent volume dosed, calculated by a control unit, from a particular switch or evaluation start. The result is a method which can in a versatile way choose a suitable period of time on the basis of calculated reducing agent volumes dosed. With advantage, any suitable probability function may be associated with a predetermined volume for a particular switch, making it possible to establish a more accurate determination of prevailing volumes in the container. If it can be determined with relatively high probability that an actual volume of reducing agent in the tank is deemed to be substantially equal to an expected and/or detected volume of reducing agent in the container, a relatively short period of time for validation of said level detected may be chosen. If conversely it can be determined with relatively high probability that an actual volume of reducing agent in the container is not deemed to be substantially equal to an expected and/or detected volume of reducing agent in the container, a relatively long period of time for validation of said level detected may be chosen. This affords the advantage of achieving a dynamic and adaptive solution to the problems mentioned above.

Said period of time may shrink when said volumes dosed increase. This means, with advantage, that a shorter time interval for validation of a reducing agent level detected in the container can be achieved. The result is a more effective method for determination of remaining volumes of liquid reducing agent in a container pertaining to an SCR system for exhaust cleaning. A smaller number of automated calculations are thus required for continuously deciding whether a specific discrete volume indication is within a specific portion of said period of time and, if such is the case, for setting remaining volumes to a lower discrete volume indication.

The method may further comprise the step of altering said period of time a certain predetermined number of times during the validity time for a particular discrete volume indication. The result is an adaptive solution to the problems mentioned above. Making it possible to alter said period of time in the case of any suitable validity time for a particular discrete volume indication achieves a flexibility which may mean shortening of said period of time, with the advantages mentioned above.

The method may further comprise the step of only determining a new period of time when a discrete volume indication is established. This makes it possible to initially choose predetermined periods in order thereby to define a suitable period for the particular container configuration. If a volume difference between two switches is relatively large, a longer period may initially be chosen. If however a volume difference between two switches is relatively small, a shorter period may initially be chosen. This period may subsequently be altered on the basis of calculated reducing agent amounts dosed.

Said reducing agent may be a fluid solution which contains urea, e.g. AdBlue. There are a number of different suitable reducing agents which may be appropriate for applications according to the invention.

The method is easy to implement in existing motor vehicles. Software for determination of remaining volumes of liquid reducing agent in a container pertaining to an SCR system for exhaust cleaning according to the invention may be installed in a control unit of the vehicle during the manufacture of the vehicle. A purchaser of the vehicle may thus have the possibility of selecting the function of the method as an option. Alternatively, software which comprises programme code for applying the innovative method to an SCR system for exhaust cleaning may be installed in a control unit of the vehicle on the occasion of upgrading at a service station, in which case the software may be loaded into a memory in the control unit. Implementing the innovative method is therefore cost-effective, particularly since no further components or subsystems need be installed in the vehicle. Relevant hardware is currently already provided in the vehicle. The invention therefore represents a cost-effective solution to the problems indicated above.

Software which comprises programme code for determination of remaining volumes of liquid reducing agent in a container pertaining to an SCR system for exhaust cleaning is easy to update or replace. Moreover, various portions of the software which comprise programme code for the innovative method may be replaced independently of one another. This modular configuration is advantageous from a maintenance perspective.

An aspect of the invention is a proposed device for determination of remaining volumes of liquid reducing agent in a container pertaining to an SCR system for exhaust cleaning. The device comprises means for continuously determining remaining volumes of reducing agent in the form of discrete volume indications, and means for continuously determining reducing agent volumes dosed by existing dosing configurations. The device may further comprise means for setting a period of time on the basis of said volumes dosed, means for continuously deciding whether such a discrete volume indication determined is within a specific portion of said period of time, and means for setting remaining volumes to a lower discrete volume indication if said discrete volume indication thus determined is within a specific portion of said period of time.

Said discrete volume indications may be predetermined depending inter alia on container configuration.

The device may further comprise means for choosing said period of time on the basis of a volume of reducing agent dosed since the time of the latest discrete volume indication determined.

Said period of time may shrink when said volumes dosed increase.

The device may further comprise means for altering said period of time a certain predetermined number of times during the validity time for a particular discrete volume indication.

The device may further comprise means for determining a new period of time when a discrete volume indication is established.

Said reducing agent may be a fluid solution which contains urea.

The above objects are also achieved with a motor vehicle which comprises the features of the device comprising an SCR system. The vehicle may be a truck, bus or car.

An aspect of the invention pertains to any platform which comprises a device with an SCR system, e.g. a watercraft. The watercraft may be of any kind, e.g. a motorboat, a steamer, a ferry or a ship.

An aspect of the invention is a proposed computer programme for determination of remaining volumes of liquid reducing agent in a container pertaining to an SCR system for exhaust cleaning, which programme comprises programme code stored on a computer-readable medium for causing an electronic control unit or another computer connected to the electronic control unit to perform steps according to any of claims 1-6.

An aspect of the invention is a proposed computer programme product comprising a programme code stored on a computer-readable medium for performing method steps according to any of claims 1-6 when said computer programme is run on an electronic control unit or another computer connected to the electronic control unit.

Further objects, advantages and novel features of the present invention will become apparent to one skilled in the art from the following details, and also by putting the invention into practice. Whereas the invention is described below, it should be noted that it is not confined to the specific details described. One skilled in the art having access to the teachings herein will recognise further applications, modifications and incorporations in other fields, which are within the scope of the invention.

### BRIEF DESCRIPTION OF THE DRAWINGS

For fuller understanding of the present invention and its further objects and advantages, the detailed description set out below should be read together with the accompanying drawings, in which the same reference notations denote similar items in the various diagrams, and in which:
Figure 1 schematically illustrates a vehicle according to an embodiment of the invention;
Figure 2 schematically illustrates a subsystem for the vehicle depicted in Figure 1, according to an embodiment of the invention;
Figure 3a schematically illustrates a measuring device for a container, according to an embodiment of the invention;
Figure 3b schematically illustrates probability functions for corresponding switches, according to an aspect of the invention;
Figure 4a is a schematic flowchart of a method according to an embodiment of the invention;
Figure 4b is a more detailed schematic flowchart of a method according to an embodiment of the invention; and
Figure 5 schematically illustrates a computer according to an embodiment of the invention.

### DETAILED DESCRIPTION OF THE DRAWINGS

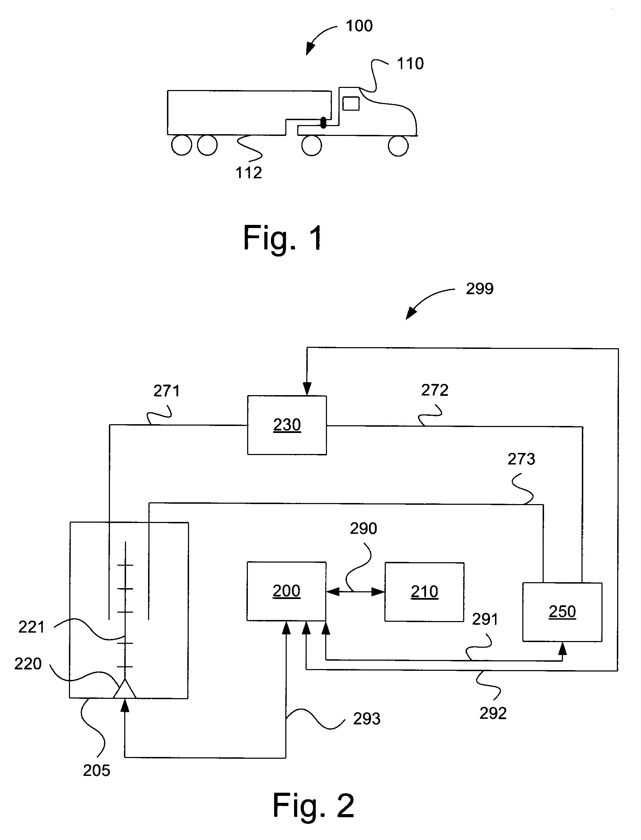

Figure 1 depicts a side view of a vehicle 100. The exemplified vehicle 100 comprises a tractor unit 110 and a semitrailer 112. The vehicle may be a heavy vehicle, e.g. a truck or a bus. The vehicle may alternatively be a car.

It should be noted that the invention is suitable for application in any SCR system and is therefore not confined to SCR systems of motor vehicles. The innovative method and the innovative device according to an aspect of the invention are well suited to other platforms which comprise an SCR system than motor vehicles, e.g. watercraft. The watercraft may be of any kind, e.g. motor boats, steamers, ferries or ships.

The innovative method and the innovative device according to an aspect of the invention are also well suited to, for example, systems which comprise industrial engines and/or engine-powered industrial robots.

The innovative method and the innovative device according to an aspect of the invention are also well suited to various kinds of power plants, e.g. an electric power plant which comprises a diesel generator.

The innovative method and the innovative device are also well suited to any engine system which comprises an engine and an SCR system, e.g. on a locomotive or some other platform.

The innovative method and the innovative device are also well suited to any system which comprises an NOₓ generator and an SCR system.

The term "link" refers herein to a communication link which may be a physical connection such as an opto-electronic communication line, or a non-physical connection such as a wireless connection, e.g. a radio link or microwave link.

The term "line" refers herein to a passage for holding and conveying a fluid, e.g. a reductant in liquid form. The line may be a pipe of any desired size and be made of any suitable material, e.g. plastic, rubber or metal.

The term "reductant" or "reducing agent" refers herein to an agent used for reacting with certain emissions in an SCR system. These emissions may for example be NOx gas. The terms "reductant" and "reducing agent" are herein used synonymously. According to a version, said reductant is so-called AdBlue. Other kinds of reductants may of course be used. AdBlue is herein cited as an example of a reductant, but one skilled in the art will appreciate that the innovative method and the innovative device are feasible with other types of reductants, subject to necessary adaptations, e.g. a relationship between volumes of reductant and corresponding amounts of reductant, in control algorithms for executing software code in accordance with the innovative method.

The terms "volume" and "amount" of reducing agent are herein used synonymously, based on the fact that an amount of reducing agent is the product of volume and concentration for a specific reducing agent. It is also regarded as a fact that a certain volume of reducing agent in a container may be associated with a certain level, or a difference in level, in a reducing agent container if the container's configuration is known per se.

Figure 2 depicts a subsystem 299 of the vehicle 100. The subsystem 299 is situated in the tractor unit 110. The subsystem 299 may be part of an SCR system. The subsystem 299 comprises in this example a container 205 arranged to hold a reductant. The container 205 is adapted to containing a suitable amount of reductant and also to being replenishable as necessary. The container might for example accommodate 75 or 50 litres of reductant.

A first line 271 is adapted to leading the reductant to a pump 230 from the container 205. The pump 230 may be any suitable pump. The pump 230 may be a diaphragm pump comprising at least one filter. The pump 230 is adapted to being driven by an electric motor. The pump 230 is adapted to drawing the reductant from the container 205 via the first line 271 and supplying it via a second line 272 to a dosing unit 250. The dosing unit 250 comprises an electrically controlled dosing valve by means of which a flow of reductant added to the exhaust system can be controlled. The pump 230 is adapted to pressurising the reductant in the second line 272. The dosing unit 250 is provided with a throttle unit against which said pressure of the reductant is built up in the subsystem 299.

The dosing unit 250 is adapted to supplying said reductant to an exhaust system (not depicted) of the vehicle 100. More specifically, the dosing unit 250 is adapted to supplying a suitable amount of reductant in a controlled way to an exhaust system of the vehicle 100. In this version, an SCR catalyst (not depicted) is situated downstream of a location in the exhaust system where the reductant supply is effected. The amount of reductant supplied in the exhaust system is intended to be used in a conventional way in the SCR catalyst for reducing the amount of unacceptable emissions in a known way.

The dosing unit 250 is situated adjacent to, for example, an exhaust pipe which is provided to lead exhaust gases from a combustion engine (not depicted) of the vehicle 100 to the SCR catalyst.

A third line 273 runs between the dosing unit 250 and the container 205. For cooling purposes, the third line 273 is adapted to leading back to the container 205 a certain amount of the reductant which is fed to the dosing valve 250.

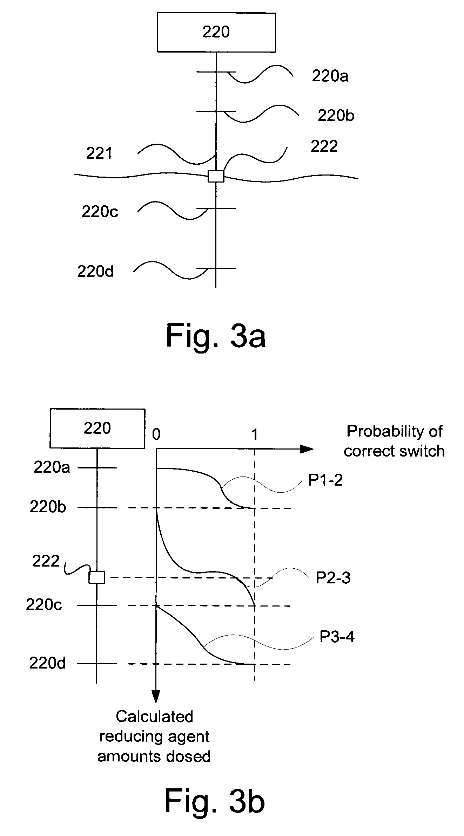

A first control unit 200 is arranged for communication with a measuring device 220 via a link 293. The measuring device 220 is adapted to detecting a prevailing reductant volume in the container 205. The measuring device 220 is adapted to detecting a prevailing reductant volume in the container 205 in the form of discrete volume indications. In this version, the measuring device 220 is configured as a float sensor which may take the form of one or more vertically arranged elongate elements. The measuring device 220 is adapted to continuously detecting a remaining reducing agent volume in the container 205 and to continuously sending signals which contain information about this to the first control unit 200. The measuring device 220 is described in more detail below with reference to Figure 3a.

The first control unit 200 is arranged for communication with the pump 230 via a link 292. The first control unit 200 is adapted to controlling operation of the pump 230 in order for example to regulate the reductant flows within the subsystem 299.

The first control unit 200 is arranged for communication with the dosing unit 250 via a link 291. The first control unit 200 is adapted to controlling operation of the dosing unit 250 in order for example to regulate the reductant supply to the exhaust system of the vehicle 100. The first control unit 200 is adapted to controlling operation of the dosing unit 250.

The first control unit 200 is adapted, according to a version, to continuously determining remaining volumes of reducing agent in the form of discrete volume indications. This is done on the basis of signals received by the measuring device 220. The first control unit 200 is adapted to continuously calculating a reducing agent volume dosed. This may be done by existing dosing configurations in such a way that a feed pressure of the dosing unit 250 is arrived at, whereupon an opening time of the dosing unit 250 is arrived at in order thereby to determine a mass flow. The first control unit 200 is adapted to continuously determining cumulative reducing agent volumes dosed. The first control unit 200 is adapted to setting a period of time on the basis of said volumes dosed. A period of time may be set for any one or more switches of the measuring device 220. The first control unit 200 is adapted to continuously deciding whether a discrete volume indication thus determined is within a specific portion of said period of time and, if such is the case, to setting remaining volumes to a lower discrete volume indication.

A second control unit 210 is arranged for communication with the first control unit 200 via a link 290. The second control unit 210 may be detachably connected to the first control unit 200. The second control unit 210 may be a control unit external to the vehicle 100. The second control unit 210 may be adapted to performing the innovative method steps according to the invention. The second control unit 210 may be used to cross-load software to the first control unit 200, particularly software for applying the innovative method. The second control unit 210 may alternatively be arranged for communication with the first control unit 200 via an internal network in the vehicle. The second control unit 210 may be adapted to performing substantially similar functions to those of the first control unit 200, e.g. continuously determining remaining reducing agent volumes in the form of discrete volume indications and continuously determining reducing agent volumes dosed by existing dosing configurations. The second control unit 210 may be adapted to performing substantially similar functions to those of the first control unit 200, e.g. determining a period of time on the basis of said volumes dosed, or continuously deciding whether such a discrete volume indication thus determined is within a specific portion of said period and, if such is the case, setting remaining volumes to a lower discrete volume indication. It should be noted that the innovative method may be applied by either the first control unit 200 or the second control 210 or by both the first control unit 200 and the second control unit 210.

Figure 3a schematically illustrates a measuring device pertaining to the reducing agent container 205, according to an embodiment of the invention.

The measuring device 220 comprises in this example a rod 221 which has at predetermined positions along it a number of switches 220a, 220b, 220c and 220d. The measuring device 220 may be arranged vertically in the container 205. The measuring device 220 may have any suitable number of switches arranged in this way. The measuring device 220 comprises suitable hardware and is prior art. A float 222 is arranged for sliding along the rod 221. The float 222 is made of suitable material and floats at the surface of the reductant in the container 205. The switches 220a, 220b, 220c and 220d are adapted to detecting the presence of the float 222. When the float is at a given switch, the measuring device 220 generates a signal which contains information about which switch is detecting the presence of the float. This information corresponds to a predetermined level, and therefore to a predetermined volume (or amount), of remaining reducing agent in the container 205. The remaining volume of reducing agent detected is a discrete volume indication which according to the invention is sent as a signal to the first control unit 200 via the link 293.

Figure 3a shows the float 222 at a surface of the reductant. In this example the first control unit 200 has established that a prevailing volume of reducing agent is defined by a volume corresponding to a discrete volume indication associated with switch 220c. Further consumption of reducing agent will result in its level dropping to that of switch 220c, whereupon the actual level of reducing agent will coincide with the reducing agent level detected.

Figure 3b is a schematic diagram of various probability functions for respective discrete volume indications in the reducing agent container, according to an embodiment of the invention.

According to the invention, a probability function may be coupled to calculated reducing agent volumes dosed. The first control unit 200 is adapted to calculating a probability that the actual reducing agent level may correspond to the reducing agent level detected in the container on the basis of reducing agent volumes dosed (by the dosing unit 250). Examples of probability functions are depicted in Figure 3b. They may be predetermined or be generated according to any suitable criteria.

A first probability function P1-2 is associated with a reducing agent partial volume which represents the difference between switches 220a and 220b. A second probability function P2-3 is associated with a reducing agent partial volume which represents the difference between switches 220b and 220c. A third probability function P3-4 is associated with a reducing agent partial volume which represents the difference between switches 220c and 220d.

According to an example, a certain probability function may be associated with two consecutive switches. According to another example, a certain probability function may be associated with any desired number of switches of the measuring device 220.

According to an example, a certain range for the value of a probability function may correspond to a particular period of time which according to the invention is used as a validation time. According to an aspect of the invention, the first control unit may continuously decide whether a specific discrete volume indication is within a specific portion of said period of time and, if such is the case, may set remaining volumes in the container to a lower discrete volume indication. According to an aspect of the invention, the first control unit may continuously decide whether a specific discrete volume indication is within a specific portion of said period of time (validation time) and, if such is the case, may set remaining volumes in the container to the nearest/consecutive/next/adjacent lower discrete volume indication.

If for example the probability for the second probability function P2-3 is within the range 0.8-0.9, this may correspond to a period of time (validation time) of, for example, 10 seconds. If switch 220c detects discrete volume indications within at least a predetermined portion of said period of time, the first control unit may find that a prevailing remaining volume of reducing agent is at the level (corresponding to a predetermined volume) of switch 220c.

According to an embodiment of the invention, a period of time (validation time) may be coupled directly to calculated reducing agent volumes dosed. In this case the first control unit 200 is adapted to using reducing agent volumes dosed (by the dosing unit 250) as a basis for determining a period of time (validation time). Said period may shrink, i.e. be determined to a decreasing value, when said volumes dosed increase. Said period may be determined as a function of said reducing agent volumes dosed, in which case said period will be a decreasing function. Said period may be determined as inversely proportional to said reducing agent volumes dosed. Said period may be determined as inversely proportional, with a certain offset, to said reducing agent volumes dosed. Said period of time may be determined as an exponentially decreasing function of said reducing agent volumes dosed. Said period of time may be determined as a non-linearly decreasing function of said reducing agent volumes dosed. Said period of time may be determined as any suitable decreasing function of said reducing agent volumes dosed.

The foregoing means with advantage that a shorter time interval for validation of a reducing agent level detected in the container can be achieved. According to an aspect of the invention, the first control unit may continuously decide whether a specific discrete volume indication is within a specific portion of said period of time and, if such is the case, may set remaining volumes in the container to a lower discrete volume indication. According to an aspect of the invention, the first control unit may continuously decide whether a specific discrete volume indication is within a specific portion of said period of time (validation time) and, if such is the case, may set remaining volumes in the container to the nearest/consecutive/next/adjacent lower discrete volume indication.

The invention thus results in a robust way of establishing an actual remaining volume of reducing agent in the container 205. The method according to the invention provides an accurate way of establishing an actual remaining volume of reducing agent in the container 205, which is advantageous in enabling the first control unit 200 to decide whether there is a match between calculated reducing agent volumes dosed and actual volumes of reducing agent remaining in the container 205.

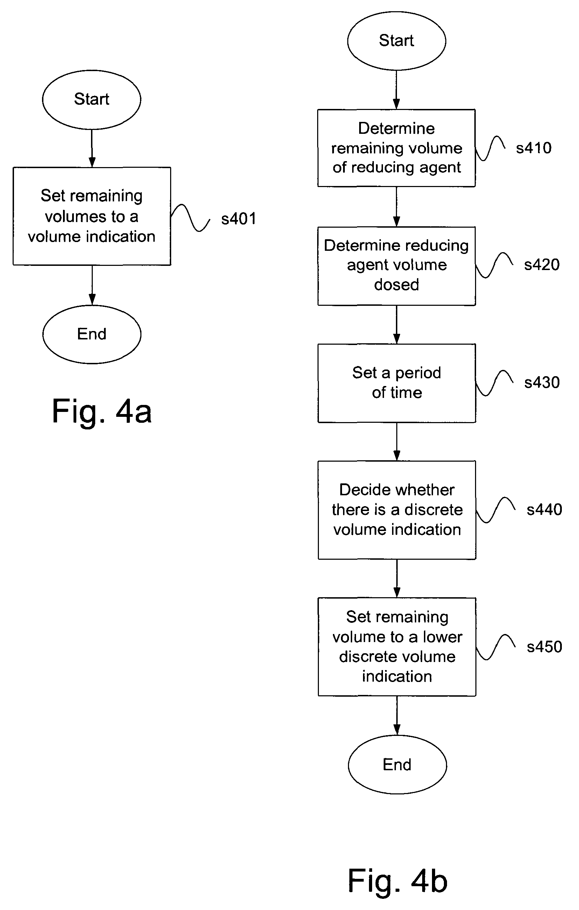

Figure 4a is a schematic flowchart of a method for determination of remaining volumes of liquid reducing agent in a container pertaining to an SCR system for exhaust cleaning, according to an embodiment of the invention. The method comprises a first step s401 comprising the steps of continuous determining remaining volumes of reducing agent in the form of discrete volume indications, and continuously determining reducing agent volumes dosed by existing dosing configurations. Step s401 also comprises the steps of establishing a period of time on the basis of said volumes dosed, continuously deciding whether a discrete volume indication thus determined is within a specific portion of said period and, if such is the case, setting remaining volumes to a lower discrete volume indication. The method ends after step s401.

Figure 4b is a schematic flowchart of a method for determination of remaining volumes of liquid reducing agent in a container pertaining to an SCR system for exhaust cleaning, according to an embodiment of the invention.

The method comprises a first step s410 comprising the step of continuously determining remaining volumes of reducing agent in the form of discrete volume indications of the container 205. This is done by means of the measuring device 220 as indicated above. Step s410 is followed by a step s420.

Method step s420 comprises the step of continuously determining reducing agent volumes dosed by existing dosing configurations. This is done by calculations performed by the first control unit 200 and is followed by a step s430.

Method step s430 comprises the step of setting a period of time on the basis of said volumes dosed. This period is a validation time during which a level detected is continuously established. Step s430 is followed by a step s440.

Method step s440 comprises the step of continuously deciding whether a discrete volume indication thus determined is within a specific portion of period of time and, if such is the case, performing a step s450.

Method step s450 comprises the step of setting remaining volumes to a lower discrete volume indication. The level regarded as prevailing is thus not altered until the discrete volume indications detected have definitely been detected for at least part of the period of time set. A probability function as above may according to an aspect of the invention be used to set a respective period of time, which may be regarded as a validation time, for the respective switch. Said period set may be updated during operation of the SCR system on the basis of reducing agent volumes dosed calculated and/or remaining volumes of reducing agent detected in the container 205. The method ends after step s450.

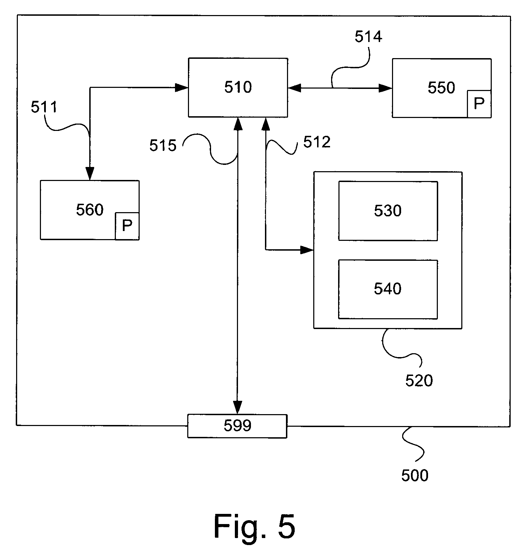

Figure 5 is a diagram of a version of a device 500. The control units 200 and 210 described with reference to Figure 2 may in a version comprise the device 500. The device 500 comprises a non-volatile memory 520, a data processing unit 510 and a read/write memory 550. The non-volatile memory 520 has a first memory element 530 in which a computer programme, e.g. an operating system, is stored for controlling the function of the device 500. The device 500 further comprises a bus controller, a serial communication port, I/O means, an A/D converter, a time and date input and transfer unit, an event counter and an interruption controller (not depicted). The non-volatile memory 520 has also a second memory element 540.

A proposed computer programme P comprises routines for determination of remaining volumes of liquid reducing agent in a container pertaining to an SCR system for exhaust cleaning according to the innovative method. The programme P may be stored in an executable form or in compressed form in a memory 560 and/or in a read/write memory 550.

Where the data processing unit 510 is described as performing a certain function, it means that the data processing unit 510 effects a certain part of the programme stored in the memory 560, or a certain part of the programme stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit 510 via a data bus 511. The read/write memory 550 is adapted to communicating with the data processing unit 510 via a data bus 514. The data port 599 may for example have the links 290, 291, 292 and 293 connected to it (see Figure 2).

When data are received on the data port 599, they are stored temporarily in the second memory element 540. When input data received have been temporarily stored, the data processing unit 510 is prepared to effect code execution as described above. According to a version, signals received on the data port 599 contain information about a volume of reducing agent (discrete volume indication) detected in the container 205. The signals received on the data port 599 may be used by the device 500 for determination of remaining volumes of liquid reducing agent in a container pertaining to an SCR system for exhaust cleaning, according to an aspect of the invention.

The device 500 is adapted to continuously determining reducing agent volumes dosed. It is adapted to continuously evaluating whether a prevailing volume of reducing agent detected in the container 205 is to be altered to some other, more appropriate, prevailing volume detected. This may be done by continuously establishing whether remaining volumes of reducing agent detected correspond better to some other discrete volume indication than that prevailing at the time.

Parts of the methods herein described may be effected by the device 500 by means of the data processing unit 510 which runs the programme stored in the memory 560 or the read/write memory 550. When the device 500 runs the programme, methods herein described are executed.

The foregoing description of the preferred embodiments of the present invention is provided for illustrative and descriptive purposes. It is not intended to be exhaustive or to restrict the invention to the variants described. Many modifications and variations will obviously suggest themselves to one skilled in the art. The embodiments have been chosen and described in order best to explain the principles of the invention and its practical applications and thus make it possible for one skilled in the art to understand the invention for various embodiments and with the various modifications appropriate to the intended use.

## Claims

1. A method for determination of remaining volumes of liquid reducing agent in a container (205) pertaining to an SCR system for exhaust cleaning, comprising the steps of
- continuously determining (s410) remaining volumes of reducing agent in the form of discrete volume indications,
- continuously determining (s420) reducing agent volumes dosed by existing dosing configurations,
**characterised by** the steps of
- setting (s430) a period of time on the basis of said volumes dosed since the time of a latest discrete volume indication determined,
- continuously deciding (s440) whether a discrete volume indication thus determined is within a specific portion of said period of time and, if such is the case,
- setting (s450) remaining volumes to a lower discrete volume indication.

2. A method according to claim 1, in which said discrete volume indications are predetermined depending inter alia on container configuration.

3. A method according to any one of claims 1-2, in which said period of time shrinks when said volumes dosed increase.

4. A method according to any one of claims 1-3, further comprising the step of
- altering said period of time a certain predetermined number of times during a validity time for a particular discrete volume indication.

5. A method according to any one of claims 1-4, further comprising the step of
- determining a new period of time when a discrete volume indication is established.

6. A device for determination of remaining volumes of liquid reducing agent in a container (205) pertaining to an SCR system for exhaust cleaning, comprising
- means (220) for continuously determining remaining volumes of reducing agent in the form of discrete volume indications,
- means (200; 210; 500) for continuously determining reducing agent volumes dosed by existing dosing configurations,
**characterised by**
- means (200; 210; 500) for setting a period of time on the basis of said volumes dosed since the time of a latest discrete volume indication determined,
- means (200; 210; 500) for continuously deciding whether a discrete volume indication thus determined is within a specific portion of said period of time and, if such is the case,
- means (200; 210; 500) for setting remaining volumes to a lower discrete volume indication if said discrete volume indication thus determined is within a specific portion of said period of time.

7. A device according to claim 6, in which said discrete volume indications are predetermined depending inter alia on container configuration.

8. A device according to any one of claims 6-7, in which said period of time shrinks when said volumes dosed increase.

9. A device according to any one of claims 6-8, further comprising
- means (200; 210; 500) for altering said period of time a certain predetermined number of times during a validity period for a particular discrete volume indication.

10. A device according to any one of claims 6-9, further comprising
- means (200; 210; 500) for determining a new period of time when a discrete volume indication is established.

11. A device according to any one of claims 6-10, in which said reducing agent is a fluid solution which contains urea.

12. A motor vehicle (100; 110) provided with a device according to any one of claims 6-11.

13. A motor vehicle (100; 110) according to claim 12, which vehicle is any from among truck, bus or car.

14. A computer programme (P) for determination of remaining volumes of liquid reducing agent in a container pertaining to an SCR system for exhaust cleaning, which programme (P) contains programme code for causing an electronic control unit (200; 500) or another computer (210; 500) connected to the electronic control unit (200; 500) to perform steps according to any one of claims 1-5.

15. A computer programme product comprising a programme code stored on a computer-readable medium for performing method steps according to any one of claims 1-5 when said computer programme is run on an electronic control unit (200; 500) or another computer (210; 500) connected to the electronic control unit (200; 500).

## Patentansprüche

1. Verfahren zur Bestimmung eines Restvolumens eines flüssigen Reduktionsmittels in einem Behälter (205) für ein SCR-System zur Abgasreinigung, umfassend die Schritte:
- kontinuierliches Bestimmen (s410) eines Restvolumens eines Reduktionsmittels in Form von diskreten Volumenhinweisen,
- kontinuierliches Bestimmen (s420) eines Reduktionsmittelvolumens, das durch existierende Dosierungseinstellungen dosiert wird,
**gekennzeichnet durch** die Schritte:
- Einstellen (s430) eines Zeitintervalls auf der Basis des seit der Zeit eines letzten bestimmten Volumenhinweises dosierten Volumens,
- kontinuierliches Entscheiden (s440), ob ein so bestimmter diskreter Volumenhinweis innerhalb eines spezifischen Teils des Zeitintervalls liegt und, wenn das der Fall ist,
- Einstellen (s450) eines Restvolumens auf einen niedrigeren diskreten Volumenhinweis.

2. Verfahren nach Anspruch 1, wobei die diskreten Volumenhinweise abhängig unter anderem von einer Containereinstellung vorbestimmt werden.

3. Verfahren nach Anspruch 1 oder 2, wobei sich das Zeitintervall verkleinert, wenn das dosierte Volumen größer wird.

4. Verfahren nach einem der Ansprüche 1 bis 3, ferner umfassend den Schritt:
- Verändern des Zeitintervalls durch eine bestimmte vorbestimmte Anzahl, während einer Gültigkeitszeit für einen speziellen diskreten Volumenhinweis.

5. Verfahren nach einem der Ansprüche 1 bis 4, ferner umfassend den Schritt:
- Bestimmen eines neuen Zeitintervalls, wenn ein diskreter Volumenhinweis feststeht.

6. Vorrichtung zur Bestimmung eines Restvolumens eines Reduktionsmittels in einem Behälter (205) für ein SCR-System zur Abgasreinigung, umfassend
- Mittel (220) zur kontinuierlichen Bestimmung von Restvolumen eines Reduktionsmittels in Form von diskreten Volumenhinweisen,
- Mittel (200; 210; 500) zum kontinuierlichen Bestimmen von durch existierende Dosierungseinstellungen dosierte Reduktionsmittelvolumen,
**gekennzeichnet durch**
- Mittel (200; 210; 500) zum Einstellen eines Zeitintervalls auf der Basis des seit der Zeit eines letzten bestimmten diskreten Volumenhinweises dosierten Volumens,
- Mittel (200; 210; 500) zum kontinuierlichen Entscheiden, ob ein so bestimmter diskreter Volumenhinweis innerhalb eines spezifischen Teils des Zeitintervalls liegt, und, wenn das der Fall ist,
- Mittel (200; 210; 500) zum Einstellen von Restvolumen auf einen niedrigeren diskreten Volumenhinweis, wenn der so bestimmte diskrete Volumenhinweis innerhalb eines spezifischen Teils des Zeitintervalls liegt.

7. Vorrichtung nach Anspruch 6, wobei die diskreten Volumenhinweise abhängig unter anderem von einer Behältereinstellung bestimmt werden.

8. Vorrichtung nach Anspruch 6 oder 7, wobei sich das Zeitintervall verkleinert, wenn das dosierte Volumen größer wird.

9. Vorrichtung nach einem der Ansprüche 6 bis 8, ferner umfassend
- Mittel (200; 210; 500) zum Verändern des Zeitintervalls durch eine bestimmte vorbestimmte Anzahl während einer Gültigkeitsdauer für einen speziellen diskreten Volumenhinweis.

10. Verfahren nach einem der Ansprüche 6 bis 9, ferner umfassend
- Mittel (200; 210; 500) zum Bestimmen eines neuen Zeitintervalls, wenn ein diskreter Volumenhinweis feststeht.

11. Vorrichtung nach einem der Ansprüche 6 bis 10, wobei das Reduktionsmittel eine Harnstoff enthaltende Flüssigkeitslösung ist.

12. Kraftfahrzeug (100; 110), das mit einer Vorrichtung nach einem der Ansprüche 6 bis 11 ausgestattet ist.

13. Kraftfahrzeug (100; 110) nach Anspruch 12, wobei das Kraftfahrzeug ein LKW, Bus oder Auto ist.

14. Computerprogramm (P) zur Bestimmung von Restvolumen eines Reduktionsmittels in einem Behälter für ein SCR-System zur Abgasreinigung, wobei das Programm (P) einen Programmcode enthält zur Auslösung einer elektronischen Steuereinheit (200; 500) oder eines anderen mit der elektronischen Steuereinheit (200; 500) verbundenen Computers (210; 500), um Schritte nach einem der Ansprüche 1 bis 5 auszuführen.

15. Computerprogrammprodukt, umfassend einen Programmcode, der auf einem computerlesbaren Medium gespeichert ist, um Verfahrensschritte nach einem der Ansprüche 1 bis 5 auszuführen, wenn das Computerprogramm auf einer elektronischen Steuereinheit (200; 500) oder einem anderen mit der elektronischen Steuereinheit (200; 500) verbundenen Computer (210; 500) läuft.

## Revendications

1. Procédé de détermination de volumes restants d'un agent réducteur liquide placé dans un récipient (205) d'un système SCR de purification de gaz d'échappement, comprenant les étapes suivantes :
- déterminer en continu (s410) des volumes restants de l'agent réducteur sous la forme d'indications discrètes de volume,
- déterminer en continu (s420) des volumes de l'agent réducteur dosés par des configurations de dosage existantes,
**caractérisé par** les étapes suivantes :
- établir (s430) une période temporelle sur la base desdits volumes dosés depuis l'instant de la dernière indication de volume discrète déterminée,
- décider en continu (s440) si une indication de volume discrète ainsi déterminée se situe dans une plage spécifique de ladite période temporelle et, si tel est le cas,
- fixer (s450) pour les volumes restants une indication de volume discrète inférieure.

2. Procédé selon la revendication 1, dans lequel lesdites indications de volume discrètes sont prédéterminées en fonction, entre autres, d'une configuration du récipient.

3. Procédé selon l'une quelconque des revendications 1 et 2, dans lequel ladite période temporelle diminue lorsque lesdits volumes dosés augmentent.

4. Procédé selon l'une quelconque des revendications 1 à 3, comprenant, en outre, l'étape consistant à :
- modifier ladite période temporelle un certain nombre prédéterminé de fois au cours d'une période de validité pour une indication de volume discrète particulière.

5. Procédé selon l'une quelconque des revendications 1 à 4, comprenant, en outre, l'étape consistant à :
- déterminer une nouvelle période temporelle lorsqu'une indication de volume discrète est établie.

6. Dispositif pour la détermination de volumes restants d'un agent réducteur de liquide dans un récipient (205) d'un système SCR de purification de gaz d'échappement, comprenant
- des moyens (220) pour déterminer en continu les volumes restants de l'agent réducteur sous la forme d'indications discrètes de volume,
- des moyens (200 ; 210 ; 500) pour déterminer en continu des volumes de l'agent réducteur dosés par des configurations de dosage existantes,
**caractérisé par**
- des moyens (200 ; 210 ; 500) pour établir une période temporelle sur la base desdits volumes dosés depuis l'instant de la dernière indication de volume discrète déterminée,
- des moyens (200 ; 210 ; 500) pour décider en continu si une indication de volume discrète ainsi déterminée se situe dans une plage spécifique de ladite période temporelle et, si tel est le cas,
- des moyens (200 ; 210 ; 500) pour fixer pour les volumes restants une indication de volume discrète inférieure si ladite indication de volume discrète ainsi déterminée se situe dans une plage spécifique de ladite période temporelle.

7. Dispositif selon la revendication 6, dans lequel lesdites indications de volume discrètes sont prédéterminées en fonction, entre autres, d'une configuration du récipient.

8. Dispositif selon l'une quelconque des revendications 6-7, dans lequel ladite période temporelle diminue lorsque lesdits volumes dosés augmentent.

9. Dispositif selon l'une quelconque des revendications 6 à 8, comprenant, en outre,
- des moyens (200 ; 210 ; 500) pour modifier ladite période temporelle un certain nombre prédéterminé de fois au cours d'une période de validité pour une indication de volume discrète particulière.

10. Dispositif selon l'une quelconque des revendications 6 à 9, comprenant, en outre :
- des moyens (200 ; 210 ; 500) pour déterminer une nouvelle période temporelle lorsqu'une indication de volume discrète est établie.

11. Dispositif selon l'une quelconque des revendications 6 à 10, dans lequel ledit agent réducteur est une solution fluide contenant de l'urée.

12. Véhicule à moteur (100; 110) pourvu d'un dispositif selon l'une quelconque des revendications 6 à 11.

13. Véhicule à moteur (100 ; 110) selon la revendication 12, lequel véhicule étant l'un quelconque des véhicules suivants : un camion, un bus ou une voiture.

14. Programme informatique (P) pour la détermination de volumes restants de l'agent réducteur liquide, dans un récipient d'un système SCR de purification de gaz d'échappement, lequel programme (P) lequel programme contient un code programme pour amener une unité de commande électronique (200, 500) ou un autre ordinateur (210 ; 500) connecté à l'unité de commande électronique (200 ; 500) à exécuter les étapes selon l'une quelconque des revendications 1 à 5.

15. Produit de programme informatique comprenant un code de programme stocké sur un support lisible par ordinateur pour exécuter les étapes de procédé selon l'une quelconque des revendications 1 à 5 lorsque ledit programme informatique est exécuté sur une unité de commande électronique (200 ; 500) ou un autre ordinateur (210 ; 500) connecté à l'unité de commande électronique (200 ; 500).
